# EUROPEAN PATENT SPECIFICATION

(11) **EP 4 578 200 B1**
(45) Date of publication and mention of the grant of the patent: **28.01.2026**
(21) Application number: 23751987.1
(22) Date of filing: 09.08.2023
(51) Int. Cl.: H04L 41/12, H04W 40/22, H04W 40/24, H04W 40/32, H04W 12/00, H04W 84/18, H04W 88/16

(54) **A METHOD FOR MIGRATING NODES IN A DISTRIBUTED NETWORK TO A CENTRALIZED NETWORK**
VERFAHREN ZUR MIGRATION VON KNOTEN IN EINEM VERTEILTEN NETZWERK IN EIN ZENTRALISIERTES NETZWERK
PROCÉDÉ DE MIGRATION DE N UDS DANS UN RÉSEAU DISTRIBUÉ VERS UN RÉSEAU CENTRALISÉ

(30) Priority: 23.08.2022 EP 22191602
(43) Date of publication of application: 02.07.2025
(73) Proprietor: Signify Holding B.V., 5656 AE Eindhoven (NL)
(72) Inventor: SHARMA, Sahil, 5656 AE Eindhoven (NL); KUMAR, Shankaran, Sandeep, 5656 AE Eindhoven (NL)
(74) Representative: Verweij, Petronella Daniëlle
(86) International application number: PCT/EP2023/072043
(87) International publication number: WO 2024/041890

(56) References cited:
- WO-A1-2021/224089

## Description

### FIELD OF THE INVENTION

The invention relates to the field of wireless communication. More particularly, various methods, apparatus, and systems are disclosed herein related to migrating nodes among two different wireless networks.

### BACKGROUND OF THE INVENTION

Zigbee, Thread and Bluetooth Mesh are examples of wireless network that are targeted at IoT applications such as lighting and building automation. They provide a low latency, low-rate service that enables messages to be passed between, for example, a light switch and one or more luminaires. Mesh networking provides great flexibility and scalability to the system. However, on the other hand, a centralized Zigbee network offers improved security and control over the network, which is also attractive in many applications. Thus, there is a need to migrate an existing distributed network to a centralized network in a reliable manner.

Some communication standards, such as a Zigbee standard, support both distributed and centralized network architectures. Such standards may also define how the distributed and centralized networks can be formed from scratch. But there is no well-defined way to move an existing distributed network to a centralized one without having to redeploy the entire network. Furthermore, it may also be desirable that the transition can be implemented on-the-fly with reduced impact on the functionality of the network.

WO2021224089A1 is related to a method of a central controller to commission a network into a hybrid topology with a core network comprising router nodes for multi-hop routing and for each router node establishing a star topology for non-router nodes.

### SUMMARY OF THE INVENTION

In the distributed network, some nodes are end nodes or leaf nodes, which rely on other nodes (router nodes or parent nodes) to relay messages to them. One problem may arise during the transition from a distributed network to a centralized network is that if those router nodes or parent nodes leave the distributed network earlier than the end nodes and/or leaf nodes, those end nodes and/or leaf nodes may lose the connection to the distributed network without being informed about the transition and then become unreachable.

It is recognized by the inventor that it is beneficial to regulate the network migration procedure by taking topology information into account. More particularly, the goal of this invention is achieved by a method as claimed in claim 1, and by a bridge device as claimed in claim 11.

In accordance with a first aspect of the invention a method for migrating two or more nodes in a distributed wireless network to a centralized wireless network is provided. The method comprises the steps of: receiving by a first bridge device configuration information about the distributed wireless network from a second bridge device in the distributed wireless network; accessing the distributed wireless network by the first bridge device based on the received configuration information; querying the two or more nodes in the distributed wireless network by the first bridge device to collect topology information among the two or more nodes; determining by the first bridge device a sequence list for requesting the two or more nodes to join the centralized wireless network based on the topology information; and informing the two or more nodes to join the centralized wireless network according to the sequence list; wherein the sequence list is arranged to allow a first node out of the two or more nodes to join the centralized wireless network earlier than a second node out of the two or more nodes, when the first node received a message from the other bridge device via a relay of the second node in the distributed wireless network.

The configuration information about the distributed wireless network may be related to a network ID of the distributed network, an operation channel of the distributed network, or another network parameter related to the distributed network. The configuration information is used to assist the first bridge device to access the distributed network.

The topology information may be collected by obtaining neighboring information related to each individual node, such as a list of its neighbours with one hop direct link, an output power used for establishing a link with a neighbour node, a received power from a neighbour node, or a link quality information related to a link with another node.

Thus, the topology information may be related to the physical deployment of the nodes in the system. The topology information may also be related to the network construction of the distributed network, such as which nodes are allocated as router nodes and which nodes are allocated as end nodes or non-routing nodes. For example, an end node may receive information from a router node, but not from another end node.

In a preferred embodiment, the sequence list is arranged to allow a first node out of the two or more nodes to join the centralized wireless network earlier than a second node out of the two or more nodes when the first node receives a message from a bridge device via a relay of the second node in the distributed wireless network.

The sequence list is arranged to avoid a situation that a critical node, e.g., a node that is the only link between two subparts of the network, moves to the new centralized network earlier than other nodes, which will leave some nodes unreachable in the distributed network to get informed about this transition. For example, a router node or a parent node will leave the distributed network later than an end node or a child node that relying on it for getting access to the distributed network.

Advantageously, the method further comprises a step of opening the centralized wireless network by the first bridge device for nodes to join.

This step may be implemented by the first bridge device before or after joining the distributed wireless network, depending on if the first bridge device can be in two networks simultaneously, such as via two radios or via a single radio in a time-sharing manner. Alternatively, the first bridge device may open the centralized wireless network after informing the two or more nodes to join the centralized wireless network. And then, the first bridge device will also inform the two or more nodes to join after a certain delay, which allows the centralized wireless network to get ready for nodes to join.

Beneficially, the method further comprises a step of providing information related to the two or more nodes by the second bridge device to the first bridge device.

The second bridge device may provide information related to individual nodes to the first bridge device to further assist the first bridge device in setting up the centralized network and establishing connections with the individual nodes.

Alternatively, the method further comprises a step of querying the two or more nodes on the distributed wireless network by the first bridge device to collect information related to the two or more nodes.

With the first bridge device joining the distributed network, it may collect such information by itself. However, since the second bridge device may have already collected such information during its normal data communication in the distributed network, it may be more efficient that such information is provided to the first bridge device by the second bridge device directly.

In one example, the information related to the two or more nodes comprises at least one of an address, a configuration parameter, and a state information related to the two or more nodes.

Advantageously, the method further comprises a step of providing one or more parameters related to the centralized wireless network by the first bridge device to the two or more nodes.

This step may be combined with the step of requesting the two or more nodes to join the centralized wireless network.

The one or more parameters may be related to a network ID of the centralized network; an operation channel of the centralized network, or another network parameter.

In one example, the method further comprises a step of restoring a node out of the two or more nodes in the centralized wireless network to a state that the node was in the distributed wireless network previously.

By knowing a configuration, a setting, a state, or a scene of an individual node in the distributed network, the first bridge device or the new bridge device may restore the node to the previous configuration, setting, state, or scene after the node moving to the new centralized network, which further enhances a smooth transition.

In another example, the method further comprises steps of generating a link key for a node out of the two or more nodes in the centralized wireless network based on the information obtained related to the two or more nodes; and informing the node about the link key.

Upon receiving information related to an individual node, such as an identifier or address of the node, an end-to-end link key may be generated by the first bridge device for that individual node. The end-to-end link key may be used to improve the security of the end to end communication in the centralized network.

This step may be carried out by the first bridge device of the centralized network, such that the first bridge device informs individual nodes about their dedicated link key.

Beneficially, at least one of the distributed wireless network and the centralized wireless network is according to a Zigbee standard.

Zigbee standard is widely adopted in home automation and lighting control applications. The Zigbee network layer natively supports both star and tree networks, and generic mesh networking. The powerful topology control provides it great flexibility in a control system, especially for reaching destination nodes that are far away from a source node with direct link.

ZigBee specifies three different device types: the ZigBee Coordinator (ZC), the ZigBee Router (ZR), and the ZigBee End Device (ZED). These three devices play different roles in a ZigBee network. A Zigbee Router (ZR) passes data between devices and/or the coordinator. A Zigbee End Device (ZED) provides only basic functionality. ZEDs are leaf nodes. They communicate only through their parent nodes and, unlike router devices, cannot relay messages intended for other nodes. They don't participate in any routing. End devices rely on their parent routers to send and receive messages. Regarding IEEE 802.15.4, ZC and ZR are fully functional devices (FFDs), whereas the ZEDs are reduced function devices (RFDs).

Thus, the topology information among the two or more nodes in a distributed wireless network may be determined jointly by the physical location of the nodes, the functionalities supported by the nodes, and the type of roles they play in the distributed network.

Optionally, the first bridge device and the second bridge device are physically co-located. For example, the first bridge device and the second bridge may be deployed next to each other in proximity, such as within a direct wireless communication range. It may also be the case that the first bridge device and the second bridge device are co-located, such that the first bridge device is to be replaced by the second bridge device after migration. Physically, it may also be possible that the first bridge device and the second bridge device are the same bridge device. It applies equally to a situation where an existing bridge device that, through a firmware update, has the capability to transition to a centralized network. All these steps would simply be carried out on the same bridge device to move its network from a distributed topology to a centralized topology.

Advantageously, the first bridge device and the second bridge device have a further communication channel, not belonging to either the distributed wireless network or the centralized wireless network, connecting each other.

The further communication channel may be either a wired channel or a wireless channel. For example, the first bridge device and the second bridge device may be connected via an IP network, e.g., Ethernet. The first bridge device and the second bridge device may also be connected via Wi-Fi network, a BLE link, or a 4g/5G cellular link.

In accordance with a second aspect of the invention a bridge device is provided. A bridge device for use to migrate two or more nodes in a distributed wireless network to a centralized wireless network, the bridge device comprises a communication interface configured to receive configuration information about the distributed wireless network from another bridge device in the distributed wireless network; a radio configured to access the distributed wireless network based on the received configuration information; query the two or more nodes in the distributed wireless network to collect topology information among the two or more nodes; a controller configured to determine a sequence list for requesting the two or more nodes to join the centralized wireless network based on the topology information; wherein the radio is further configured to inform the two or more nodes to join the centralized wireless network according to the sequence list; wherein the sequence list is arranged to allow a first node out of the two or more nodes to join the centralized wireless network earlier than a second node out of the two or more nodes, when the first node received a message from the other bridge device via a relay of the second node in the distributed wireless network.

The entire procedure of migrating nodes to the centralized network may be initiated by the new bridge device of the centralized network, which for example first request to join the existing distributed network by obtaining configuration parameters from the old bridge device of the distributed wireless network. And then, either the new bridge device of the centralized network or the existing bridge device in the distributed wireless network may take charge of the main responsibility in arranging a smooth transition. In a preferred example, the new bridge device carries out the main steps during the procedure.

Topology information is used for determining the sequence list to ensure that no nodes are left unreachable in the distributed network during the transition. The topology information may be collected by the new bridge device by querying the nodes in the distributed network. Alternatively, it may also be possible that the existing bridge device collects the topology information on a regular basis during earlier data communication in the distributed network, and then the existing bridge device may provide such topology information to the new bridge device directly. Based on the topology information, the new bridge device determines the sequence list and requests the nodes to join the centralized network according to the sequence list.

The existing bridge device may also provide further information related to an individual node, such as its address, a configuration parameter, or a state of the node in the distributed network. Such information may help the new bridge device to restore the node to a previous state or configuration after the node moving to the new centralized network. The information may also be used to generate dedicated link key to secure an end-to-end communication link.

Beneficially, the sequence list is arranged to allow a first node out of the two or more nodes to join the centralized wireless network earlier than a second node out of the two or more nodes, when the first node received a message from the other bridge device via a relay of the second node in the distributed wireless network.

In one option, the radio is further configured to open the centralized wireless network for nodes to join after informing the two or more nodes to join the centralized wireless network according to the sequence list.

In this option, the first bridge device will open the centralized wireless network after informing the two or more nodes to join the centralized wireless network. Thus, the first bridge device will also inform the two or more nodes to join after a certain delay, which allows the centralized wireless network to get ready for nodes to join.

In another option, the radio is further configured to open the centralized wireless network for nodes and operate on both the centralized wireless network and the distributed wireless network in a time-sharing manner.

As disclosed above, the first bridge device may open the centralized wireless network before it initiates the transition procedure. This may be achieved if the first bridge device can stay in the distributed network and the centralized network simultaneously, such as by incorporating two radios in the first bridge device or by using a single radio of the first bridge device in a time-sharing manner between the two networks.

### BRIEF DESCRIPTION OF THE DRAWINGS

In the drawings, like reference characters generally refer to the same parts throughout the different figures. Also, the drawings are not necessarily to scale, emphasis instead generally being placed upon illustrating the principles of the application.
FIG. 1 shows a possible system setup;
FIG. 2 shows a flow-chart of the method for migrating two or more nodes in a distributed wireless network to a centralized wireless network;
FIG. 3 shows a block diagram of a bridge device for use in a distributed wireless network; and
FIG. 4 illustrates an example of a bridge device.

### DETAILED DESCRIPTION OF EMBODIMENTS

The embodiments set forth below represent information to enable those skilled in the art to practice the embodiments. Upon reading the following description in light of the accompanying drawings, those skilled in the art will understand the concepts of the disclosure and will recognize applications of these concepts not particularly addressed herein. It should be understood that these concepts and applications fall within the scope of the disclosure.

For wireless communication, a distributed network topology provides improved flexibility and scalability. However, it may also run the risk of compromised security. To take Zigbee as an example, there are well-known weaknesses in the distributed Zigbee network, especially during the joining process. In order to provide better security, it is appealing to move to a centralized network which has additional secure joining mechanisms. Although the Zigbee standard defines how distributed and centralized networks can be formed from scratch, there is no well-defined way to move an existing distributed network to a centralized one without having to redeploy the entire network. From a user experience point of view, it is important to be able to make this transition with minimal user intervention and disturbances to the network. Preferably, the transition can be implemented on-the-fly.

One way is to use the Zigbee Commissioning Cluster (ZCC), which essentially defines messages that can be sent to individual nodes in the network, with information such as the Zigbee PAN-ID, Extended PAN ID, network and Link keys, etc. of the centralized network to join. It also defines a message which instructs the node to restart and join the new network. Upon restart, the node joins the new network using the more secure centralized joining mechanism defined in Zigbee and is also "aware" that it is now part of a centralized network.

Another way is to define customized messages that essentially perform a subset of what ZCC does. In its simplest form, a simple restart and re-join message may be sent to the node, which would make the node search for new networks, and then find the centralized network and join it.

Regardless of the method used, nodes need to be nudged into leaving the existing distributed network for joining the new centralized one. The known methods demonstrate how to move a single node from a distributed network to a centralized network. However, a process/method to reliably migrating every node in a network to centralized is still lacking. As an example, a problem that could arise is that if a critical node, e.g., a node that is the only link between two subparts of the network, moves to the new centralized network earlier than other nodes, which will leave some nodes unreachable in the distributed network to get informed about this transition. A workaround is that the Extended PAN-ID, PAN-ID, network key, and etc., may be kept the same for both existing distributed network and the new centralized network. However, such a workaround may lead to some unexpected confusion for the nodes.

The present application tackles the issue in a more generalized way where the centralized network can be completely independent, with fresh network parameters, such as the PAN-ID, network key, etc. This also provides improved security as the new centralized network is free to choose a fresh new key, and hence the new centralized network starts as if it were built from scratch.

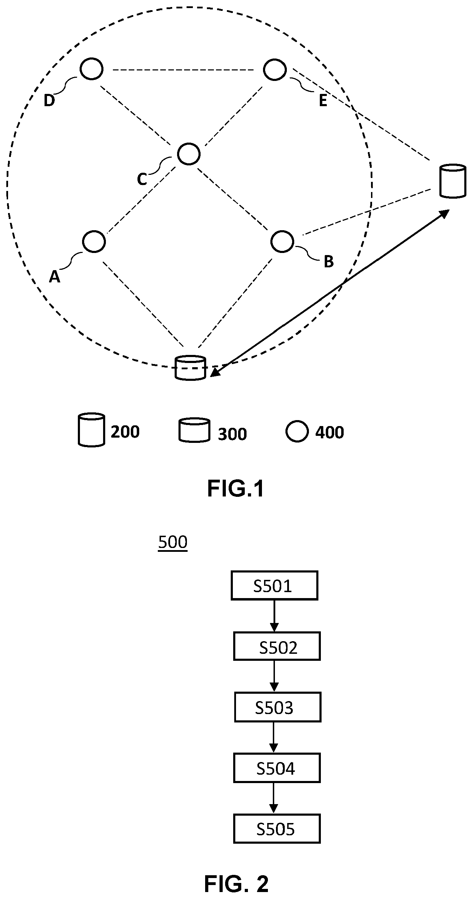

FIG. 1 shows a possible system setup where an existing bridge device and a new bridge device. In this example, the new bridge device may be located remotely from the existing bridge device and are connected via a further communication channel, not belonging to either the distributed network or the centralized network. The further communication channel may be according to a wireless communication protocol or a wired communication protocol.

According to a Zigbee protocol, a conventional mechanism to migrate nodes from an existing distributed network to a new centralized network is to communicate the existing Zigbee network parameters (PAN-ID, network key, etc.) and other information related to the distributed network to the new bridge device 200. This information may be encrypted and communicated over a wired connection, such as via an IP network, or a wireless connection between the existing bridge device 300 and the new bridge device 200. The wireless connection may be based on another wireless communication protocol that is different from either the existing distributed network or the new centralized network, such as Wi-Fi, BLE, or 4G/5G cellular.

FIG. 1 also highlights that a problem may arise if the existing bridge device 300 would naively instruct nodes (A to E) to sequentially switch to join the new bridge device 200 in centralized mode (either by issuing Zigbee Commissioning Cluster commands or simpler custom commands). Once node C leaves the distributed network, nodes D and E will no longer be reachable.

Therefore, a new scheme is required to solve this problem. To assist a new bridge device to join the distributed network, an existing bridge device may send network parameters (PAN-ID, Extended PAN-ID, channel, network key, etc.) related to the distributed network directly to the new bridge device via the communication interface. It may also be possible that the existing bridge device makes the distributed network open for any node to join. Optionally, the existing bridge device may also send a list of identifies or addresses (e.g., IEEE addresses) of nodes, their existing/current settings/states/status (e.g., for a luminaire, it may be an on/off state, a colour temperature status, etc.) to the new bridge device in this step. As one example to implement the proposed solution, the steps involved may be as follows.
a) Accordingly, the new bridge device 200 may either perform a regular join (if the existing bridge device 300 opens the network for joining) or does a secure join (if the existing bridge device 300 already provides network parameters related to the distributed network). At the end of this step, the new bridge device 200 joins the existing distributed network.
b) The new bridge device 200 may ping the different nodes for topology information based on the list of identifies/addresses received in step a). The new bridge device 200 may also broadcast a query to the nodes in the distributed network to collect the topology information. The topology information may include its links/neighbours, transmit/receive power, etc. Based on the topology information, the existing 300 or new bridge device 200 can derive an overview of the network topology among the plurality of nodes. If the new bridge device 200 receives a list of identifies/addresses in step a), based on the responses from the nodes, the new bridge device 200 may also derive if there are certain nodes it cannot reach. This is a beneficial by-product, which may help the user to realize that the location of the new bridge device 200 is not optimal given the physical layout of the system.
c) The new bridge device 200 may select a PAN-ID, Extended PAN-ID, an operation frequency channel, a network key at random, or other network parameters for the centralized network that it will form.
d) The new bridge device 200 may derive a sequence list based on the topology information gathered in step b). The new bridge device 200 may then request the nodes to leave the existing distributed network according to the sequence list. As an example, with the topology shown in FIG. 1, the new bridge device 200 will first ask bulbs A and D to leave, followed by bulb C, and then followed by bulb B and E. This order would ensure that all the nodes in the network receive the request to leave the existing network. Before issuing the request or combined with the request, the new bridge device 200 may also send network parameters selected in step c) to the nodes (one option is to send via the use of ZCC messages, if implemented).
e) Once all the nodes have been sent the request, or the ZCC message, or another customized message for the same purpose, the new bridge device 200 leaves the distributed network itself and forms the centralized network using the parameters it selected in step d). The new bridge device 200 then opens the centralized network for nodes to join. The new bridge device 200 makes use of the information obtained in previous steps to successfully make nodes join in centralized mode. If the new bridge device 200 also receives information related to the nodes in step a) from the existing bridge device 300, for instance, could help it obtain information derived from install codes, possibly from a backend server, to obtain link keys to make these nodes successfully join in a centralized network.
f) Certain vendors of radio chips may offer a feature wherein a node can be part of two networks simultaneously. The new bridge device 200 may have this feature. In this case, since the bridge device can be on two separate networks, it could issue leave requests for the distributed network in parallel with allowing joins on its' own centralized network.
g) Optionally, once all nodes have joined the centralized network, the new bridge device 200 may use information related to the nodes obtained in step a) to return the nodes to states (an on/off state, a colour temperature state, etc.) that they were previously in.

FIG. 2 shows a flow-chart of the method 500 for migrating two or more nodes in a distributed wireless network to a centralized wireless network. The method 500 comprises the steps of receiving in step S501 by a first bridge device 200 configuration information about the distributed wireless network from a second bridge device 300 in the distributed wireless network; accessing in step S502 the distributed wireless network by the first bridge device 200 based on the received configuration information; querying in step S503 the two or more nodes 400 in the distributed wireless network by the first bridge device 200 to collect topology information among the two or more nodes 400; determining in step S504 by the first bridge device 200 a sequence list for requesting the two or more nodes 400 to join the centralized wireless network based on the topology information; and informing in step S505 the two or more nodes 400 to join the centralized wireless network according to the sequence list.

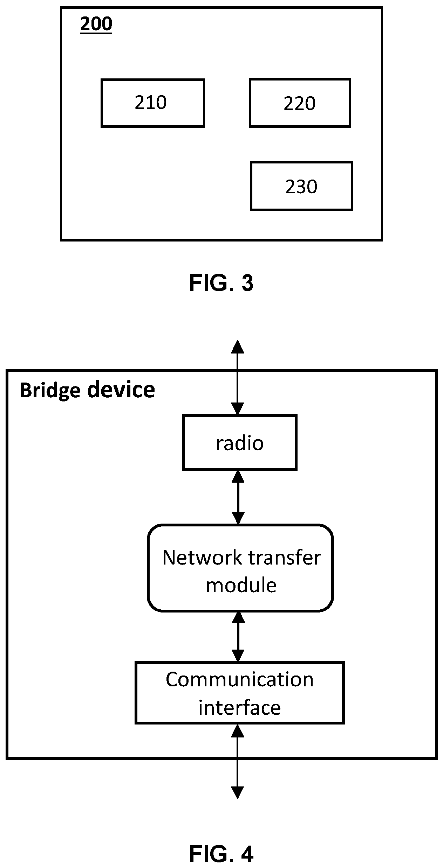

FIG. 3 shows a block diagram of a bridge device 200. As a basic setup, the bridge device 200 comprises a communication interface 210, a radio 220 and a controller 230. The communication interface 210 is configured to receive configuration information about the distributed wireless network from another bridge device in the distributed wireless network. The radio 220 is configured to access the distributed wireless network based on the received configuration information; and query the two or more nodes 400 in the distributed wireless network to collect topology information among the two or more nodes 400. The controller 230 is configured to determine a sequence list for requesting the two or more nodes 400 to join the centralized wireless network based on the topology information. The radio is further configured to inform the two or more nodes 400 to join the centralized wireless network according to the sequence list.

As an example, the invention may be implemented by a network transfer module in a bridge device, as shown in FIG. 4. The network transfer module may be realized in the controller of the bridge device. In the new bridge device 200, the network transfer module gets the configuration information related to the existing distributed network from the existing bridge device 300 in step a) mentioned above, and accordingly, the network transfer module may control the radio of the new bridge device 200 to carry out step a-b), such as to join the distributed network and to query nodes for topology information. It may also be possible that the network transfer module obtains the topology information from the existing bridge device 300, which has already collected such information during regular communication with the nodes. Based on the collected topology information, the network transfer module calculates in step d) to generate an appropriate sequence list for migrating the nodes to the new bridge device. The network transfer module then continues to monitor the radio to send request to all the nodes on the distributed network according to the determined sequence list. Once all the requests have been sent, the network transfer module controls the radio to switch from the distributed network to the new centralized network and wait for nodes to join.

Note that the application applies equally to a situation where an existing bridge device that, through a firmware update, has the capability to transition to a centralized network. All these steps would simply be carried out on the same bridge device to move its network from a distributed topology to a centralized topology.

The method according to the present application may be implemented on a computer as a computer implemented method, or in dedicated hardware, or in a combination of both.

## Claims

1. A method (500) for migrating two or more nodes (400) in a distributed wireless network to a centralized wireless network, the method (500) comprising the steps of:
- receiving (S501) by a first bridge device (200) configuration information about the distributed wireless network from a second bridge device (300) in the distributed wireless network;
- accessing (S502) the distributed wireless network by the first bridge device (200) based on the received configuration information;
- querying (S503) the two or more nodes (400) in the distributed wireless network by the first bridge device (200) to collect topology information among the two or more nodes (400);
- determining (S504) by the first bridge device (200) a sequence list for requesting the two or more nodes (400) to join the centralized wireless network based on the topology information;
- informing (S505) the two or more nodes (400) to join the centralized wireless network according to the sequence list;
wherein the sequence list is arranged to allow a first node out of the two or more nodes (400) to join the centralized wireless network earlier than a second node out of the two or more nodes (400) when the first node receives a message from a bridge device via a relay of the second node in the distributed wireless network.

2. The method (500) of claim 1 further comprising:
- opening the centralized wireless network by the first bridge device (200) for nodes (400) to join.

3. The method (500) of claim 1 or 2 further comprising:
- providing information related to the two or more nodes (400) by the second bridge device (300) to the first bridge device (200).

4. The method (500) of claim 1 or 2 further comprising:
- querying the two or more nodes (400) on the distributed wireless network by the first bridge device (200) to collect information related to the two or more nodes (400).

5. The method (500) of claim 3 or 4, wherein the information related to the two or more nodes (400) comprises at least one of an address, a configuration parameter, and a state information related to the two or more nodes (400).

6. The method (500) of any one of previous claims 2-5 further comprising:
- providing one or more parameters related to the centralized wireless network by the first bridge device (200) to the two or more nodes (400).

7. The method (500) of any one of previous claims 3-6 further comprising:
- restoring a node out of the two or more nodes (400) in the centralized wireless network to a state that the node was in the distributed wireless network previously.

8. The method (500) of any one of previous claims 3-7 further comprising:
- generating a link key for a node out of the two or more nodes (400) in the centralized wireless network based on the information obtained related to the two or more nodes (400); and
- informing the node about the link key.

9. The method (500) of any one of previous claims, wherein at least one of the distributed wireless network and the centralized wireless network is according to a Zigbee standard.

10. The method (500) of any one of previous claims, wherein the first bridge device (200) and the second bridge device (300) have a further communication channel, not belonging to either the distributed wireless network or the centralized wireless network, connecting each other.

11. A bridge device (200) for use to migrate two or more nodes (400) in a distributed wireless network to a centralized wireless network, the bridge device (200) comprising:
- a communication interface (210) configured to receive configuration information about the distributed wireless network from another bridge device in the distributed wireless network;
- a radio (220) configured to:
o access the distributed wireless network based on the received configuration information;
o query the two or more nodes (400) in the distributed wireless network to collect topology information among the two or more nodes (400);
- a controller (230) configured to:
o determine a sequence list for requesting the two or more nodes (400) to join the centralized wireless network based on the topology information;
wherein the radio is further configured to inform the two or more nodes (400) to join the centralized wireless network according to the sequence list;
wherein the sequence list is arranged to allow a first node out of the two or more nodes (400) to join the centralized wireless network earlier than a second node out of the two or more nodes (400), when the first node received a message from the other bridge device via a relay of the second node in the distributed wireless network.

12. The bridge device (200) of claim 11, wherein the radio (220) is further configured to open the centralized wireless network for nodes (400) to join after informing the two or more nodes (400) to join the centralized wireless network according to the sequence list.

13. The bridge device (200) of claim 11, wherein the radio (220) is further configured to open the centralized wireless network for nodes (400) and operate on both the centralized wireless network and the distributed wireless network in a time-sharing manner.

## Patentansprüche

1. Verfahren (500) zum Migrieren von zwei oder mehr Knoten (400) in einem verteilten drahtlosen Netzwerk zu einem zentralisierten drahtlosen Netzwerk, das Verfahren (500) umfassend die Schritte:
- Empfangen (S501) von Konfigurationsinformationen über das verteilte drahtlose Netzwerk durch eine erste Brückenvorrichtung (200) von einer zweiten Brückenvorrichtung (300) in dem verteilten drahtlosen Netzwerk;
- Zugreifen (S502) auf das verteilte drahtlose Netzwerk durch die erste Brückenvorrichtung (200) basierend auf den empfangenen Konfigurationsinformationen;
- Abfragen (S503) der zwei oder mehr Knoten (400) in dem verteilten drahtlosen Netzwerk durch die erste Brückenvorrichtung (200), um Topologieinformationen zwischen den zwei oder mehr Knoten (400) zu sammeln;
- Bestimmen (S504) einer Sequenzliste durch die erste Brückenvorrichtung (200) zum Auffordern der zwei oder mehr Knoten (400), dem zentralisierten drahtlosen Netzwerk beizutreten, basierend auf den Topologieinformationen;
- Informieren (S505) der zwei oder mehr Knoten (400), dem zentralisierten drahtlosen Netzwerk gemäß der Sequenzliste beizutreten;
wobei die Sequenzliste angeordnet ist, um einem ersten Knoten aus den zwei oder mehr Knoten (400) zu ermöglichen, dem zentralisierten drahtlosen Netzwerk früher beizutreten als einem zweiten Knoten aus den zwei oder mehr Knoten (400), wenn der erste Knoten über ein Relais des zweiten Knotens in dem verteilten drahtlosen Netzwerk eine Nachricht von einer Brückenvorrichtung empfängt.

2. Verfahren (500) nach Anspruch 1, ferner umfassend:
- Öffnen des zentralisierten drahtlosen Netzwerks durch die erste Brückenvorrichtung (200), damit Knoten (400) beitreten können.

3. Verfahren (500) nach Anspruch 1 oder 2, ferner umfassend:
- Bereitstellen von Informationen, die sich auf die zwei oder mehr Knoten (400) beziehen, durch die zweite Brückenvorrichtung (300) an die erste Brückenvorrichtung (200).

4. Verfahren (500) nach Anspruch 1 oder 2, ferner umfassend:
- Abfragen der zwei oder mehr Knoten (400) auf dem verteilten drahtlosen Netzwerk durch die erste Brückenvorrichtung (200), um Informationen zu sammeln, die sich auf die zwei oder mehr Knoten (400) beziehen.

5. Verfahren (500) nach Anspruch 3 oder 4, wobei die Informationen, die sich auf die zwei oder mehr Knoten (400) beziehen, mindestens eines von einer Adresse, einem Konfigurationsparameter und Statusinformationen umfassen, die sich auf die zwei oder mehr Knoten (400) beziehen.

6. Verfahren (500)nach einem der vorstehenden Ansprüche 2 bis 5, ferner umfassend:
- Bereitstellen eines oder mehrerer Parameter, die sich auf das zentralisierte drahtlose Netzwerk beziehen, durch die erste Brückenvorrichtung (200) für die zwei oder mehr Knoten (400).

7. Verfahren (500) nach einem der vorstehenden Ansprüche 3 bis 6, ferner umfassend:
- Wiederherstellen eines Knotens aus den zwei oder mehr Knoten (400) in dem zentralisierten drahtlosen Netzwerk in einen Zustand, in dem sich der Knoten zuvor in dem verteilten drahtlosen Netzwerk befand.

8. Verfahren (500) nach einem der vorstehenden Ansprüche 3 bis 7, ferner umfassend:
- Erzeugen eines Verbindungsschlüssels für einen Knoten aus den zwei oder mehr Knoten (400) in dem zentralisierten drahtlosen Netzwerk basierend auf den erhaltenen Informationen, die sich auf die zwei oder mehr Knoten (400) beziehen; und
- Informieren des Knotens über den Verbindungsschlüssel.

9. Verfahren (500) nach einem der vorstehenden Ansprüche, wobei mindestens eines von dem verteilten drahtlosen Netzwerk und dem zentralisierten drahtlosen Netzwerk einem Zigbee-Standard entspricht.

10. Verfahren (500) nach einem der vorstehenden Ansprüche, wobei die erste Brückenvorrichtung (200) und die zweite Brückenvorrichtung (300) einen weiteren Kommunikationskanal aufweisen, der weder zu dem verteilten drahtlosen Netzwerk noch dem zentralisierten drahtlosen Netzwerk gehört und sie miteinander verknüpft.

11. Brückenvorrichtung (200) zur Verwendung bei einem Migrieren von zwei oder mehr Knoten (400) in einem verteilten drahtlosen Netzwerk zu einem zentralisierten drahtlosen Netzwerk, die Brückenvorrichtung (200) umfassend:
- eine Kommunikationsschnittstelle (210), die konfiguriert ist, um Konfigurationsinformationen über das verteilte drahtlose Netzwerk von einer anderen Brückenvorrichtung in dem verteilten drahtlosen Netzwerk zu empfangen;
- ein Funkgerät (220), das konfiguriert ist zum:
o Zugreifen auf das verteilte drahtlose Netzwerk basierend auf den empfangenen Konfigurationsinformationen;
o Abfragen der zwei oder mehr Knoten (400) in dem verteilten drahtlosen Netzwerk, um Topologieinformationen zwischen den zwei oder mehr Knoten (400) zu sammeln;
- eine Steuerung (230), die konfiguriert ist zum:
o Bestimmen einer Sequenzliste zum Anfordern der zwei oder mehr Knoten (400), dem zentralisierten drahtlosen Netzwerk beizutreten, basierend auf den Topologieinformationen;
wobei das Funkgerät ferner konfiguriert ist, um die zwei oder mehr Knoten (400) gemäß der Sequenzliste darüber zu informieren, dem zentralisierten drahtlosen Netzwerk beizutreten;
wobei die Sequenzliste angeordnet ist, um einem ersten Knoten aus den zwei oder mehr Knoten (400) zu ermöglichen, dem zentralisierten drahtlosen Netzwerk früher als ein zweiter Knoten aus den zwei oder mehr Knoten (400) beizutreten, wenn der erste Knoten über ein Relais des zweiten Knotens in dem verteilten drahtlosen Netzwerk eine Nachricht von der anderen Brückenvorrichtung empfangen hat.

12. Brückenvorrichtung (200) nach Anspruch 11, wobei das Funkgerät (220) ferner konfiguriert ist, um das zentralisierte drahtlose Netzwerk für Knoten (400) zu öffnen, um, nach dem Informieren der zwei oder mehr Knoten (400) gemäß der Sequenzliste, dem zentralisierten drahtlosen Netzwerk beizutreten.

13. Brückenvorrichtung (200) nach Anspruch 11, wobei das Funkgerät (220) ferner konfiguriert ist, um das zentralisierte drahtlose Netzwerk für Knoten (400) zu öffnen und sowohl in dem zentralisierten drahtlosen Netzwerk als auch dem verteilten drahtlosen Netzwerk auf eine Time-Sharing-Weise betrieben zu werden.

## Revendications

1. Procédé (500) de migration de deux nœuds (400) ou plus d'un réseau sans fil distribué vers un réseau sans fil centralisé, le procédé (500) comprenant les étapes suivantes :
- la réception (S501), par un premier dispositif de pont (200), d'informations de configuration relatives au réseau sans fil distribué de la part d'un second dispositif de pont (300) dans le réseau sans fil distribué ;
- l'accès (S502), par le premier dispositif de pont (200), au réseau sans fil distribué en fonction des informations de configuration reçues ;
- l'interrogation (S503), par le premier dispositif de pont (200), des deux nœuds (400) ou plus du réseau sans fil distribué afin de recueillir des informations topologiques parmi les deux nœuds (400) ou plus ;
- la détermination (S504), par le premier dispositif de pont (200), d'une liste de séquences permettant de demander aux deux nœuds (400) ou plus de rejoindre le réseau sans fil centralisé en fonction des informations topologiques ;
- le fait d'informer (S505) les deux nœuds (400) ou plus qu'ils doivent rejoindre le réseau sans fil centralisé conformément à la liste de séquences ;
dans lequel la liste de séquences est organisée de manière à permettre à un premier nœud parmi les deux nœuds (400) ou plus de rejoindre le réseau sans fil centralisé avant un second nœud parmi les deux nœuds (400) ou plus lorsque le premier nœud reçoit un message provenant d'un dispositif de pont par l'intermédiaire d'un relais du second nœud dans le réseau sans fil distribué.

2. Procédé (500) selon la revendication 1, comprenant en outre :
- l'ouverture du réseau sans fil centralisé par le premier dispositif de pont (200) afin que les nœuds (400) puissent le rejoindre.

3. Procédé (500) selon la revendication 1 ou 2, comprenant en outre :
- la fourniture, au premier dispositif de pont (200), d'informations relatives aux deux nœuds (400) ou plus par le second dispositif de pont (300).

4. Procédé (500) selon la revendication 1 ou 2, comprenant en outre :
- l'interrogation, par le premier dispositif de pont (200), des deux nœuds (400) ou plus sur le réseau sans fil distribué afin de recueillir des informations relatives aux deux nœuds (400) ou plus.

5. Procédé (500) selon la revendication 3 ou 4, dans lequel les informations relatives aux deux nœuds (400) ou plus comprennent au moins une information parmi une adresse, un paramètre de configuration et une information d'état relative aux deux nœuds (400) ou plus.

6. Procédé (500) selon l'une quelconque des revendications 2 à 5 précédentes, comprenant en outre :
- la fourniture, aux deux nœuds (400) ou plus, d'un ou plusieurs paramètres liés au réseau sans fil centralisé par le premier dispositif de pont (200).

7. Procédé (500) selon l'une quelconque des revendications 3 à 6 précédentes, comprenant en outre :
- le rétablissement d'un nœud parmi les deux nœuds (400) ou plus du réseau sans fil centralisé dans l'état où il se trouvait précédemment dans le réseau sans fil distribué.

8. Procédé (500) selon l'une quelconque des revendications 3 à 7 précédentes, comprenant en outre :
- la génération d'une clé de liaison pour un nœud parmi les deux nœuds (400) ou plus du réseau sans fil centralisé en fonction des informations obtenues relatives au deux nœuds (400) ou plus ; et
- le fait d'informer le nœud à propos de la clé de liaison.

9. Procédé (500) selon l'une quelconque des revendications précédentes, dans lequel au moins l'un parmi le réseau sans fil distribué et le réseau sans fil centralisé est conforme à la norme Zigbee.

10. Procédé (500) selon l'une quelconque des revendications précédentes, dans lequel le premier dispositif de pont (200) et le second dispositif de pont (300) ont un autre canal de communication, n'appartenant ni au réseau sans fil distribué ni au réseau sans fil centralisé, qui les relie l'un à l'autre.

11. Dispositif de pont (200) utilisé pour faire migrer deux nœuds (400) ou plus d'un réseau sans fil distribué vers un réseau sans fil centralisé, le dispositif de pont (200) comprenant :
- une interface de communication (210) configurée pour recevoir des informations de configuration à propos du réseau sans fil distribué provenant d'un autre dispositif de pont dans le réseau sans fil distribué ;
- une radio (220) configurée pour :
o accéder au réseau sans fil distribué en fonction des informations de configuration reçues ;
o interroger les deux nœuds (400) ou plus dans le réseau sans fil distribué afin de recueillir des informations topologiques parmi les deux nœuds (400) ou plus ;
- un dispositif de commande (230) configuré pour :
o déterminer une liste de séquences permettant de demander aux deux nœuds (400) ou plus de rejoindre le réseau sans fil centralisé en fonction des informations topologiques ;
dans lequel la radio est en outre configurée pour informer les deux nœuds (400) ou plus qu'ils doivent rejoindre le réseau sans fil centralisé conformément à la liste de séquences ;
dans lequel la liste de séquences est organisée de manière à permettre à un premier nœud parmi les deux nœuds (400) ou plus de rejoindre le réseau sans fil centralisé avant un second nœud parmi les deux nœuds (400) ou plus lorsque le premier nœud a reçu un message provenant de l'autre dispositif de pont par l'intermédiaire d'un relais du second nœud dans le réseau sans fil distribué.

12. Dispositif de pont (200) selon la revendication 11, dans lequel la radio (220) est en outre configurée pour ouvrir le réseau sans fil centralisé pour que les nœuds (400) le rejoignent après avoir informé les deux nœuds (400) ou plus qu'ils doivent rejoindre le réseau sans fil centralisé conformément à la liste de séquences.

13. Dispositif de pont (200) selon la revendication 11, dans lequel la radio (220) est en outre configurée pour ouvrir le réseau sans fil centralisé aux nœuds (400) et fonctionner à la fois sur le réseau sans fil centralisé et le réseau sans fil distribué en temps partagé.
